# EUROPÄISCHE PATENTSCHRIFT

(11) **EP 3 697 553 B1**
(45) Veröffentlichungstag und Bekanntmachung des Hinweises auf die Patenterteilung: **24.03.2021**
(21) Anmeldenummer: 18789358.1
(22) Anmeldetag: 15.10.2018
(51) Int. Cl.: B22D 11/128, F16L 27/08, F16L 27/093

(54) **VORRICHTUNG ZUM ANKUPPELN EINER KÜHLMITTELZUFUHR AN EINE WALZE**
APPARATUS FOR COUPLING A COOLANT SUPPLY TO A ROLL
DISPOSITIF POUR ACCOUPLER UNE ALIMENTATION EN AGENT DE REFROIDISSEMENT À UN CYLINDRE

(30) Priorität: 18.10.2017 DE 102017218629; 30.04.2018 DE 102018206688
(43) Veröffentlichungstag der Anmeldung: 26.08.2020
(73) Patentinhaber: SMS Group GmbH, 40237 Düsseldorf (DE)
(72) Erfinder: STAVENOW, Axel, 40627 Düsseldorf (DE); RAILE, Alexander, 40822 Mettmann (DE); STEUTEN, Michael, 47447 Moers (DE); WISSEN, Tobias, 47259 Duisburg (DE)
(74) Vertreter: Klüppel, Walter
(86) Internationale Anmeldenummer: PCT/EP2018/078120
(87) Internationale Veröffentlichungsnummer: WO 2019/076836

(56) Entgegenhaltungen:
- EP-A1- 1 613 441
- WO-A1-2007/048834
- WO-A1-2011/117383
- CA-A1- 2 094 828
- DE-C1- 19 613 032

## Beschreibung

### Technisches Gebiet

Die Erfindung betrifft eine Vorrichtung zum Ankuppeln einer Kühlmittelzufuhr an eine Rolle und/oder Walze, insbesondere zur Anwendung in der schmelzmetallurgischen Industrie, etwa einer Stranggießanlage.

### Hintergrund der Erfindung

Bei einer Stranggießanlage wird das zu gießende flüssige Metall zunächst einer Kokille zugeführt. Die Kokille, die als Trichterkokille ausgeführt sein kann, bringt die Metallschmelze in die gewünschte Strangform. Der noch nicht durcherstarrte Strang tritt vertikal nach unten aus der Kokille aus und wird anschließend entlang einer Strangführung transportiert, während er nach und nach abkühlt. Weist die Strangführung einen Biegebereich auf, in dem der Strang aus der vertikalen Richtung nach unten in die horizontale Richtung umgelenkt wird, wird die Stranggießanlage als "Senkrecht-Abbiegeanlage" bezeichnet. Der Transport des Strangs findet über Rollen statt, die paarweise angeordnet sind und einen Spaltgang ausbilden, durch den der Strang tritt. An die Strangführung schließt sich zumeist ein Richttreiber an, der mehrere angetriebene Rollen aufweist und eingerichtet ist, um den Strang aktiv aus der Strangführung herauszuziehen. Der Richttreiber kann als Teil eines Verbindungssystems angesehen werden, das zwischen der Strangführung und einem Walzwerk zum Walzen des gegossenen Strangs liegt.

Während des Transports und der Verarbeitung des Strangs kommt dieser mit Rollen und Walzen in Kontakt, die aufgrund der hohen Strangtemperatur zumindest teilweise gekühlt werden, indem die zu kühlenden Rollen oder Walzen mit einem Kühlmittel, beispielsweise Wasser, durchströmt werden. Zu diesem Zweck müssen eine Kühlmittelzufuhr und ggf. eine Kühlmittelabfuhr auf zuverlässige Weise mit der zu kühlenden Rolle oder Walze verbunden werden, so dass eine Zirkulation des Kühlmittels etwa durch eine im Walzen- oder Rollenzapfen verlaufende Bohrung realisierbar ist.

Die EP 1 613 441 B1 beschreibt eine Vorrichtung zum Ankuppeln einer Kühlmittelzuführung an eine Walze. Die darin dargestellte technische Lösung macht von einem Flansch gebrauch, der in den Walzenzapfen eingesetzt ist. Der Flansch dient zur Aufnahme einer elastischen Hülse. Der Flansch und die elastische Hülse sind Teil einer Dichteinheit, d.h. jener Einheit, die als Mittel zum Abdichten eines walzenseitigen Abschnitts der Kühlmittelzuführung gegen die Walzenbohrung, die mit dem Kühlmittel zu durchströmen ist, fungiert. Die Konstruktion erfordert einen Walzenzapfen, der ein seitliches Anlegen und Fixieren des Flansches ermöglicht, wodurch der Durchmesser des Walzenzapfens ein durch den Flansch bestimmtes Minimum nicht ohne weiteres unterschreiten kann_{.} Die DE 196 13 032 C1 beschreibt eine weitere Vorrichtung zum Ankuppeln einer Kühlmittelzuführung an eine Walze.

### Darstellung der Erfindung

Da die im folgenden dargestellte Erfindung für Rollen und Walzen unterschiedlicher Art anwendbar ist, wird die Bezeichnung "Rolle" von nun an als Oberbegriff verwendet, der Rollen und Walzen zum Transport und zur Bearbeitung eines strang- oder bandförmigen Metallprodukts jeglicher Art umfasst, so etwa Transportrollen, Richttreiberrollen, Arbeitswalzen, Stützwalzen, Zwischenwalzen usw..

Eine Aufgabe der Erfindung besteht darin, eine Vorrichtung zum Ankuppeln einer Kühlmittelzufuhr und/oder Kühlmittelabfuhr an eine Rolle bereitzustellen, die bei kompakter Bauart eine hohe Zuverlässigkeit und Wartbarkeit aufweist.

Gelöst wird die Aufgabe mit einer Vorrichtung mit den Merkmalen des Anspruchs 1. Vorteilhafte Weiterbildungen folgen aus den Unteransprüchen, der folgenden Darstellung der Erfindung sowie der Beschreibung bevorzugter Ausführungsbeispiele.

Die erfindungsgemäße Vorrichtung dient zum Ankuppeln einer Kühlmittelzufuhr und/oder Kühlmittelabfuhr an eine Rolle. Die Vorrichtung findet vorzugsweise in der schmelzmetallurgischen Industrie, insbesondere bei Stranggießanlagen, Anwendung. Vorzugsweise ist die Vorrichtung zum Ankuppeln einer Kühlmittelzufuhr und/oder Kühlmittelabfuhr an eine Transportrolle, Richttreiberrolle, Arbeitswalze, Stützwalze oder Zwischenwalze ausgelegt.

Die Rolle weist einen Zapfen auf, der in einem Lagerbock, der als stationärer Rahmen oder Gestell ausgeführt sein kann, drehbar gelagert ist. Die Lagerung findet vorzugsweise über ein oder mehrere Wälzlager statt, die am Lagerbock befestigt sind. Der Zapfen weist ferner eine seitliche, sich in Axialrichtung erstreckende Aussparung auf, die vorzugsweise eine sich in Axialrichtung erstreckende und zentral auf der Achse der Rolle und des Zapfens liegende Bohrung ist, wodurch sich der Zapfen und die Aussparung koaxial erstrecken. Die Rolle weist zudem mindestens einen Rollen-Kühlkanal auf, der von einem Kühlmittel durchströmbar ist, um die Rolle während des Betriebs von innen zu kühlen. Vorzugsweise ist der Rollen-Kühlkanal (analog mehrere Rollen-Kühlkanäle) so eingerichtet, dass das Kühlmittel bei angekuppelter Vorrichtung im Innern der Rolle zirkulieren kann.

Die erfindungsgemäße Vorrichtung zum Ankuppeln einer Kühlmittelzufuhr und/oder Kühlmittelabfuhr an die Rolle weist zumindest einen Kühlmittelkanal auf, der auf der Seite des Zapfens mit dem Rollen-Kühlkanal in Fluidverbindung bringbar ist. Diese Verbindung ist vorzugsweise lösbar eingerichtet, um einen Austausch der Komponenten zu ermöglichen und die Wartung zu vereinfachen. Die Vorrichtung weist ferner eine Dichteinheit zum Abdichten der Fluidverbindung zwischen dem Kühlmittelkanal und dem Rollen-Kühlkanal auf. Die Dichteinheit dient dazu, ein Entweichen des Kühlfluids trotz relativ zueinander beweglicher Komponenten zu vermeiden. Zu diesem Zweck weist die Dichteinheit eine innere Baugruppe und eine äußere Baugruppe auf. Die innere Baugruppe weist ein hohlzylindrisches Element auf, das in die seitliche Aussparung des Zapfens einsetzbar oder eingesetzt ist. Im montierten Zustand ist das hohlzylindrische Element so in der seitlichen Aussparung eingesetzt, dass sich dieses zusammen mit der Rolle dreht. Vorzugsweise ist das hohlzylindrische Element kraft- und/oder formschlüssig in der seitlichen Aussparung des Zapfens fixierbar oder fixiert. Das hohlzylindrische Element weist an der Zapfenaußenseite in Axialrichtung gesehen, d.h. am hinteren Ende in Einsetzrichtung, keinen Flansch auf. In anderen Worten: Der Außendurchmesser des hohlzylindrischen Elements geht nicht über den Durchmesser der seitlichen Aussparung hinaus. Vorzugsweise weist das hohlzylindrische Element entlang seiner axialen Erstreckung einen konstanten Außendurchmesser auf, der dem der seitlichen Aussparung entspricht.

Die Dichteinheit und somit die gesamte Vorrichtung können aufgrund des flanschlosen, hohlzylindrischen Elements besonders kompakt ausgeführt werden. Insbesondere ist die Dichteinheit für Zapfen besonders kleiner Durchmesser geeignet anwendbar. Die Wartbarkeit der Dichteinheit wird dadurch nicht beeinträchtigt.

Zur Befestigung des hohlzylindrischen Elements weist die innere Baugruppe vorzugsweise ferner einen Sicherungsring auf, der gegen eine Stirnfläche des hohlzylindrischen Elements anschlagbar ist. Hierbei ist vorzugsweise jene Stirnfläche an der axialen Außenseite, d.h. der hinteren Seite in Einsetzrichtung, gemeint. Der Sicherungsring kann als eigenständiges Bauteil eingerichtet sein, dann ist er vorzugsweise in einer Nut, ausgebildet in der seitlichen Aussparung des Zapfens, fixierbar; der Sicherungsring kann aber auch integral oder einstückig mit dem hohlzylindrischen Element und/oder dem Zapfen ausgebildet sein. Unter Zuhilfenahme des Sicherungsrings ist eine baulich einfache und zuverlässige Fixierung des hohlzylindrischen Elements in der seitlichen Aussparung des Zapfens realisierbar. Jedoch kann die Befestigung oder Fixierung auch auf andere Weise erfolgen, sofern das hohlzylindrische Element in dem oben beschriebenen Sinn flanschlos ist.

Vorzugsweise weist das hohlzylindrische Element im eingesetzten Zustand an der Innenseite in Axialrichtung gesehen, d.h. der Vorderseite in Einsetzrichtung, einen Boden auf, der das hohlzylindrische Element zumindest teilweise schließt. Das hohlzylindrische Element hat in diesem Fall somit ungefähr die Form eines Topfes. Der Boden kann jedoch von einer oder mehreren Öffnungen durchdrungen sein, insbesondere um auf diese Weise einen Durchgang zum Versorgen des Rollen-Kühlkanals zu realisieren. Vorzugsweise weist der Boden eine axiale Bohrung auf, die mit einer axialen Rollenbohrung, die Teil einer Realisierung des Rollen-Kühlkanals ist, in Fluidverbindung steht. Alternativ oder zusätzlich kann die axiale Bohrung des Bodens ein Rohr aufnehmen, das sich in die Rolle erstreckt und Teil einer Realisierung des Rollen-Kühlkanals ist.

Vorzugsweise weist die innere Baugruppe mindestens einen Stift auf, durch den das hohlzylindrische Element am Zapfen fixierbar ist, indem der Stift in eine Stiftöffnung des hohlzylindrischen Elements und eine entsprechende, dazu ausgerichtete Stiftöffnung des Zapfens einbringbar ist. Mithilfe des Stifts, ggf. zusätzlich zum oben beschriebenen Sicherungsring, ist eine baulich einfache und zuverlässige Fixierung des hohlzylindrischen Elements in der seitlichen Aussparung des Zapfens realisierbar. Allerdings kann die Befestigung oder Fixierung auch auf andere Weise erfolgen, sofern das hohlzylindrische Element in dem oben beschriebenen Sinn flanschlos ist. Vorzugsweise ist die Stiftöffnung des hohlzylindrischen Elements im Boden ausgebildet.

Vorzugsweise weist die innere Baugruppe einen Sicherungsdeckel auf, der im montierten Zustand gegen eine Stirnfläche des hohlzylindrischen Elements anschlägt und am Zapfen befestigt ist, beispielsweise mittels einer oder mehrerer Schrauben verschraubt ist. Gemäß einer besonders bevorzugten Ausführungsform fixiert der Sicherungsdeckel das hohlzylindrische Element formschlüssig in der seitlichen Aussparung des Zapfens. Der Formschluss kann zwischen dem hohlzylindrischen Element und der seitlichen Aussparung des Zapfens und/oder zwischen dem hohlzylindrischen Element und dem Sicherungsdeckel vorliegen. Dadurch wird ein Verdrehen des hohlzylindrischen Elements in der seitlichen Aussparung des Zapfens verhindert, wodurch eine übermäßige Beanspruchung von Dichtungsmitteln, etwa O-Ringen, im hohlzylindrischen Element unterbunden wird. Die Gefahr einer etwaigen Undichtigkeit der Drehdurchführung wird vermindert.

Vorzugsweise weist die äußere Baugruppe eine elastische Hülse auf, die in das hohlzylindrische Element einsetzbar oder eingesetzt ist. Die elastische Hülse ist Teil der Dichteinheit und beispielsweise aus Edelstahl gefertigt, sie kann aber auch aus einem anderen Material oder einer Kombination verschiedener Materialien und/oder Teile (etwa aus einem Kunststoff oder Gummi) gefertigt sein, sofern gewährleistet ist, dass deren Form und Elastizität eine zuverlässige Abdichtung gewährleisten.

Vorzugsweise weist die innere Baugruppe einen Gleitring, vorzugsweise fest mit dem hohlzylindrischen Element verbunden, und die äußere Baugruppe ebenfalls einen Gleitring, vorzugsweise fest mit der elastischen Hülse verbunden, auf, die zur Abdichtung der Fluidverbindung miteinander im Reibkontakt stehen. Auf diese Weise wird die Drehbarkeit der Rolle relativ zur äußeren Baugruppe ermöglicht und gleichzeitig eine hohe Dichtigkeit gewährleistet, um ein Entweichen des Kühlfluids an der Fluidzufuhr zu vermeiden. Vorzugsweise sind die Dichtflächen der beiden Gleitringe senkrecht zur Drehachse der Rolle angeordnet. Diese geometrische Anordnung der Dichtflächen ist bevorzugt, um die auf die Gleitringe wirkenden Kräfte auf technisch einfache Weise aufnehmen zu können; allerdings kann die Dichteinheit diesbezüglich auch auf andere Weise aufgebaut sein, soweit ein Entweichen des Kühlfluids an den relativ zueinander beweglichen Teilen unterbunden wird.

Vorzugsweise sind die beiden Gleitringe im Innern des hohlzylindrischen Elements angeordnet, wodurch die Dichteinheit besonders kompakt aufgebaut werden kann. Vorzugsweise sind die Gleitringe an der Seite des Bodens des hohlzylindrischen Elements vorgesehen, wobei in diesem Fall der Gleitring der inneren Baugruppe in einer Ausnehmung des Bodens des hohlzylindrischen Elements zumindest teilweise eingesetzt und so an dem hohlzylindrischen Element fixiert sein kann. Der Boden wird auf diese Weise synergetisch zum kraft- und/oder formschlüssigen Fixieren des Gleitrings der inneren Baugruppe mitgenutzt.

Vorzugsweise weist die äußere Baugruppe ferner ein Einsatzstück auf, das lösbar am Lagerbock anbringbar ist und zumindest einen ersten Kanal aufweist, der im montierten Zustand des Einsatzstücks den Kühlmittelkanal mit dem Rollen-Kühlkanal in Fluidverbindung bringt. Durch das Einsatzstück wird gewährleistet, dass ein Zugriff von außen auf die Dichteinheit, beispielsweise zur Durchführung von Wartungsarbeiten oder zum Austausch von Komponenten, erfolgen kann, ohne dass eine umfangreiche Demontage des Lagerbocks oder eines etwaigen Gehäuses erforderlich ist. So ist beispielsweise ein Zuführen eines Spülmediums wie Pressluft auf einfache Weise möglich, um das Rolleninnere durch Ausblasen von dem Kühlfluid und/oder Verunreinigungen zu befreien und so die Wartungsarbeiten zu erleichtern. Bei montiertem Einsatzstück sind sowohl die Komponenten der Kühlmittelzufuhr und ggf. Kühlmittelabfuhr als auch die Dichteinheit gegen Einflüsse von außen, insbesondere in der schwierigen Umgebung einer Stranggießanlage geschützt, wodurch einem übermäßigen Verschleiß vorgebeugt wird.

Vorzugsweise weist die Rolle eine sich axial erstreckende Rollenbohrung auf, in die ein Rohr eingesetzt ist, so dass im Innern des Rohrs ein erster Rollen-Kühlkanal und in einem Spalt zwischen dem Rohr und der Rollenbohrung

(genauer gesagt: der Wandung der Rollenbohrung) oder einem zweiten, sich koaxial erstreckenden Rohr ein zweiter Rollen-Kühlkanal ausgebildet ist. Das Rohr und die Rollenbohrung bzw. das zweite Rohr erstrecken sich vorzugsweise parallel und konzentrisch. Vorzugsweise weist die Vorrichtung nun zumindest zwei Kühlmittelkanäle auf, die entsprechend mit dem ersten Rollen-Kühlkanal und dem zweiten Rollen-Kühlkanal in Fluidverbindung bringbar sind. Auf diese Weise wird auf kompakte Weise ein Kühlmittelkreislauf mit Zulauf und Ablauf auf einer Seite der Rolle realisiert. Vorzugsweise weist das Einsatzstück ferner einen zweiten Kanal auf, wobei im montierten Zustand des Einsatzstücks der erste Kanal und der zweite Kanal entsprechend mit dem ersten Rollen-Kühlkanal und dem zweiten Rollen-Kühlkanal, sowie auf der anderen Seite jeweils mit einem der Kühlmittelkanäle in Fluidverbindung stehen.

Vorzugsweise ragt das hohlzylindrische Element im eingesetzten Zustand nicht über den Zapfen hinaus, in Axialrichtung gesehen, wodurch eine besonders kompakte Realisierung der Dichteinheit und somit der Vorrichtung insgesamt erzielt wird.

Die oben dargelegte Vorrichtung zum Ankuppeln einer Kühlmittelzufuhr und/oder Kühlmittelabfuhr an eine Rolle ist besonders geeignet in der schmelzmetallurgischen Industrie, etwa in einer Stranggießanlage, anwendbar. Doch die Erfindung kann auch in anderen Bereichen umgesetzt werden. Diesbezüglich seien beispielhaft Walz- und/oder Wickelanwendungen in der metallverarbeitenden Industrie allgemein oder bei Papiermaschinen oder Textilmaschinen genannt.

Weitere Vorteile und Merkmale der vorliegenden Erfindung sind aus der folgenden Beschreibung bevorzugter Ausführungsbeispiele ersichtlich. Die dort beschriebenen Merkmale können alleinstehend oder in Kombination mit einem oder mehreren der oben dargelegten Merkmale realisiert werden, insofern sich die Merkmale nicht widersprechen. Die folgende Beschreibung der bevorzugten Ausführungsbeispiele erfolgt mit Bezug auf die begleitende Zeichnung.

### Kurze Beschreibung der Figuren

Die Figur 1 zeigt einen Längsschnitt durch eine Vorrichtung zum Ankuppeln einer Kühlmittelzufuhr und Kühlmittelabfuhr an eine Rolle gemäß einem Ausführungsbeispiel.

Die Figur 2 zeigt einen Längsschnitt durch eine Vorrichtung zum Ankuppeln einer Kühlmittelzufuhr und Kühlmittelabfuhr an eine Rolle gemäß einem weiteren Ausführungsbeispiel.

### Detaillierte Beschreibung bevorzugter Ausführungsbeispiele

Im Folgenden werden bevorzugte Ausführungsbeispiele anhand der Figuren beschrieben. Dabei sind gleiche, ähnliche oder gleichwirkende Elemente mit identischen Bezugszeichen versehen. Auf eine wiederholende Beschreibung dieser Elemente wird zudem teilweise verzichtet, um Redundanzen zu vermeiden.

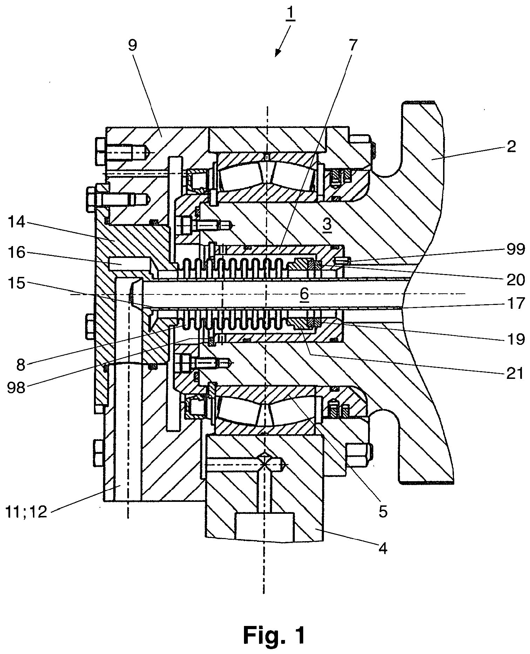

Die Figur 1 zeigt eine Vorrichtung 1 gemäß einem ersten Ausführungsbeispiel, zum Ankuppeln einer Kühlmittelzufuhr an eine Rolle 2, die beispielsweise eine Transportrolle, Arbeitswalze, Stützwalze usw. in einer Stranggießanlage sein kann. Die Rolle 2 weist einen Zapfen 3 auf, der von einem oder mehreren Wälzlagern 5 drehbar gelagert ist. Das Wälzlager 5 ist an einem Lagerbock 4, etwa einem stationären Rahmen oder Gestell, befestigt.

Die Rolle 2 weist eine sich axial erstreckende Rollenbohrung 6 auf, die als Kühlkanal fungiert, durch den die Rolle 2 mit einem Kühlmittel, vorzugsweise Wasser, versorgt wird. Der Kühlkanal erstreckt sich im vorliegenden Ausführungsbeispiel zentral auf und entlang der Achse der Rolle 2, allerdings kann die Rolle 2 auch auf andere Weise mit einem Kühlmittel durchströmt werden (etwa durch einen oder mehrere Kühlkanäle, die an anderer Stelle den Körper der Rolle 2 durchdringen), solange eine zuverlässige Versorgung mit einem Kühlmittel von einer Kühlmittelzufuhr gewährleistet ist.

In eine seitliche Aussparung oder Bohrung des Zapfens 3 ist ein hohlzylindrisches Element 7 eingesetzt, das zur Aufnahme einer elastischen Hülse 8 dient. Das hohlzylindrische Element 7 hat ungefähr die Form eines Topfes, abgesehen davon, dass der Boden des Topfes von einem Rohr 17, das in der Rollenbohrung 6 verläuft, durchdrungen wird. Das hohlzylindrische Element 7 ist so eingesetzt, dass der Boden in Axialrichtung gesehen weiter im Innern der Rolle 2 liegt als das vollständig offene Ende des hohlzylindrischen Elements 7. Das hohlzylindrische Element 7 weist keinen Flansch auf, der außen an der Stirnseite des Zapfens 3 anliegt. Das hohlzylindrische Element 7 ragt im vorliegenden Ausführungsbeispiel zudem nicht über das Ende des Zapfens 3 hinaus, in Axialrichtung gesehen.

Die elastische Hülse 8 ist beispielsweise aus Edelstahl gefertigt, sie kann aber auch aus einem anderen Material oder einer Kombination verschiedener Materialien und/oder Teile (etwa aus einem Kunststoff oder Gummi) gefertigt sein, sofern gewährleistet ist, dass deren Form und Elastizität eine zuverlässige Abdichtung gewährleisten. Die elastische Hülse 8 ist in dem dargestellten Ausführungsbeispiel lösbar, insbesondere austauschbar, in den Flansch 7 eingesetzt.

Die axiale Stirnseite des Zapfens 3 ist gemäß dem Ausführungsbeispiel von einem Lagerbockdeckel 9 abgedeckt. Der Lagerbockdeckel 9 weist einen ersten Kühlmittelkanal 11 und ggf. einen zweiten Kühlmittelkanal 12 (bei einer Zuführung und Abführung des Kühlmittels auf derselben Seite der Rolle 2) auf. Die Kühlmittelkanäle 11, 12 können als Teil der Kühlmittelzufuhr angesehen werden oder mit einer solchen verbunden sein. Der Kühlmittelkanal 11 steht mit einem Kühlmittelkanal im Innern der Rolle 2 in Fluidverbindung, so dass dieser über den Kühlmittelkanal 11 mit einem Kühlmittel versorgt werden kann.

Im vorliegenden Ausführungsbeispiel ist in eine Öffnung des Lagerbockdeckels 9 zu diesem Zweck ein Einsatzstück 14 mit einem darin verlaufenden ersten Kanal 15 eingesetzt, der im montierten Zustand des Einsatzstücks 14 mit dem Kühlmittelkanal 11 in Fluidverbindung steht. Der ins Rolleninnere weisende erste Kanal 15 ragt in einen Ringspalt oder geht in einen solchen über, der von zwei sich koaxial erstreckenden Rohren ausgebildet wird, wobei das innere Rohr das oben erwähnte Rohr 17 ist. Durch den Ringspalt wird das Kühlmittel ins Innere der Rolle 2 transportiert. Der Ringspalt ist dabei so bemessen, dass einerseits eine relative Verdrehbarkeit der beiden Rohre gegeben ist und gleichzeitig ein hinreichender Durchfluss des Kühlmittels ermöglicht wird. Der Rücktransport des Kühlmittels erfolgt durch das Innere des Rohrs 17.

Das Einsatzstück 14 kann ferner einen zweiten Kanal 16 aufweisen, der - sofern vorhanden - mit dem Kühlmittelkanal 12 in Fluidverbindung steht. Durch den zweiten Kanal 16 wird gemäß dem in der Figur 1 gezeigten Ausführungsbeispiel der Abtransport des Kühlmittels vom Rohr 17 durchgeführt, wodurch eine Kühlmittelzirkulation mit einem Zulauf und einem Ablauf auf einer Seite der Rolle 2 realisiert wird. Die Kanäle im Innern der Rolle 2 und des Zapfens 3, die mit dem Kühlmittel durchströmbar sind, werden auch als Rollen-Kühlkanäle bezeichnet. Der Zu- und Abfluss des Kühlmittels im Innern der Rolle 2 wird vorzugsweise so organisiert, dass das frische Kühlmittel durch den oben beschriebenen Ringspalt in die Rolle 2 einströmt und durch das Innere des Rohrs 17 ausströmt. Zu diesem Zweck mündet der Kühlmittelkanal im Inneren des Rohrs 17 über den zweiten Kanal 16 in den Kühlmittelkanal 12. Allerdings besteht diesbezüglich keine Beschränkung, sofern die Rollen-Kühlkanäle und die Verbindungen mit den Kühlmittelkanälen 11, 12 so realisiert sind, dass ein zuverlässiger Kühlmittelumlauf gewährleistet ist. Es sei in diesem Zusammenhang darauf hingewiesen, dass in dem Querschnitt der Figur 1 lediglich ein Kühlmittelkanal 11 gezeigt ist, während der andere Kühlmittelkanal 12 außerhalb des Schnitts verläuft. Die beiden Kühlmittelkanäle 11 und 12 bilden im Querschnitt senkrecht zur Drehachse der Rolle 2 vorzugsweise eine V-Form aus, wobei sie zum Rohr 17 hin aufeinander zu laufen und dort über die beiden Kanäle 15 und 16 mit den entsprechenden Rollen-Kühlkanälen in Fluidverbindung stehen.

Zur sicheren Fluidverbindung zwischen der Fluidzufuhr und der Rolle 2 ist eine Dichteinheit vorgesehen. Die Dichteinheit weist eine äußere und eine innere Baugruppe auf.

Die innere Baugruppe weist das hohlzylindrische Element 7 und gemäß dem vorliegenden ersten Ausführungsbeispiel einen Gleitring 20 auf. Das hohlzylindrische Element 7 und der Gleitring 20 können fest miteinander verbunden sein, worunter auch eine integrale und/oder einstückige Verbindung fällt. Vorzugsweise ist der Gleitring 20 zumindest teilweise in eine Ausnehmung des Bodens des hohlzylindrischen Elements 7 eingesetzt, wodurch eine einfache und sichere Fixierung des Gleitrings 20 am hohlzylindrischen Element 7 gewährleistet ist. Auf diese Weise findet eine form- und/oder kraftschlüssige Verbindung zwischen dem Gleitring 20 und dem hohlzylindrischen Element 7 statt.

Die äußere Baugruppe weist die elastische Hülse 8 sowie das Einsatzstück 14 auf. Ferner weist die äußere Baugruppe der Dichteinheit einen Gleitring 19 auf, der mit dem Gleitring 20 im Reibkontakt steht, um ein Drehen der Rolle 2 relativ zur äußeren Baugruppe zu ermöglichen und gleichzeitig eine hohe Dichtigkeit zu gewährleisten, wodurch ein Entweichen des Kühlfluids vermieden wird. Gemäß dem vorliegenden Ausführungsbeispiel sind die Dichtflächen der beiden Gleitringe 19 und 20 senkrecht zur Drehachse der Rolle 2 angeordnet. Diese geometrische Anordnung der Dichtflächen ist bevorzugt, um die auf die Gleitringe 19 und 20 wirkenden Kräfte auf technisch einfache und sichere Weise aufnehmen zu können; allerdings kann die Dichteinheit diesbezüglich auch auf andere Weise aufgebaut sein, soweit ein Entweichen des Kühlfluids an den relativ zueinander beweglichen Teilen unterbunden wird. Im vorliegenden Ausführungsbeispiel weist die äußere Baugruppe der Dichteinheit ferner ein Ansatzstück 21 auf, das der Stabilisierung und Befestigung des Gleitrings 19 an der Hülse 8 dient. Ggf. kann auf das Ansatzstück 21 verzichtet werden. Ein, mehrere oder alle Komponenten der äußeren Baugruppe können fest miteinander verbunden sein, worunter auch eine integrale und/oder einstückige Ausführung fällt.

In dem vorliegenden Ausführungsbeispiel befinden sich die Gleitringe 19, 20 am bodenseitigen Ende des hohlzylindrischen Elements 7 (in Axialrichtung gesehen), wodurch Bauraum auf der Seite des Einsatzstücks 14 gespart werden kann, was insgesamt zu einer kompakteren baulichen Ausführung der Vorrichtung beiträgt. Allerdings können die Gleitringe 19, 20 auch an anderer Stelle positioniert sein.

Gemäß dem vorliegenden Ausführungsbeispiel ist das hohlzylindrische Element 7 auf der Seite des Einsatzstücks 14 mittels eines Sicherungsrings 98 fixiert, der gegen die Stirnfläche des hohlzylindrischen Elements 7 anschlägt und in einer Nut, ausgebildet in der seitlichen Aussparung des Zapfens 3, fixiert ist. Der Sicherungsring 98 und das hohlzylindrische Element können alternativ einstückig oder integral ausgebildet sein. Ferner kann der Sicherungsring auch als einstückiges oder integrales Teil des Zapfens 3 gefertigt sein. Das entgegengesetzte, bodenseitige Ende des hohlzylindrischen Elements ist beispielhaft mittels eines oder mehrerer Stifte 99 am Zapfen 3 fixiert. Zu diesem Zweck ist der Stift 99 (analog mehrere Stifte) in eine Öffnung am Boden des hohlzylindrischen Elements 7 und eine entsprechende, dazu ausgerichtete Öffnung des Zapfens 3 eingebracht. Der Sicherungsring 98 sowie der Stift 99 sind der inneren Baugruppe zugeordnet.

Das dargelegte Ausführungsbeispiel und dessen beschriebene Modifikationen ermöglicht eine baulich einfache und zuverlässige Fixierung des hohlzylindrischen Elements in der seitlichen Aussparung des Zapfens 3. Allerdings kann die Befestigung oder Fixierung auch auf andere Weise erfolgen, sofern auf einen Flansch auf der Seite des Einsatzstücks 14 verzichtet werden kann.

Durch das Einsatzstück 14 wird gewährleistet, dass ein Zugriff von außen auf die Dichteinheit, beispielsweise zur Durchführung von Wartungsarbeiten oder zum Austausch von Komponenten, erfolgen kann, ohne dass ein Abnehmen des gesamten Lagerbockdeckels 9 erforderlich ist. So ist ein Zuführen eines Spülmediums wie Pressluft möglich, um das Rolleninnere durch Ausblasen von dem Kühlfluid oder Verunreinigungen zu befreien und so die Wartungsarbeiten zu erleichtern. Ferner kann die Dichteinheit und somit die gesamte Vorrichtung aufgrund des flanschlosen, hohlzylindrischen Elements 7 besonders kompakt ausgeführt werden. Insbesondere ist die Dichteinheit für Zapfen 3 besonders kleiner Durchmesser anwendbar.

Die Befestigung des Lagerbockdeckels 9 an dem Lagerbock 4 erfolgt bevorzugt lösbar, etwa über Befestigungsschrauben. Ebenso ist das Einsatzstück 14 am Lagerbockdeckel 9 vorzugsweise über Befestigungsschrauben lösbar befestigt. Somit kann ein Zugriff von außen auf einfache Weise erfolgen. Bei im Lagerbockdeckel 9 montiertem Einsatzstück 14 sind sowohl die Komponenten der Kühlmittelzufuhr und Kühlmittelabfuhr als auch die Dichteinheit gegen Einflüsse von außen, insbesondere in der schwierigen Umgebung einer Stranggießanlage, geschützt, wodurch einem übermäßigen Verschleiß vorgebeugt wird.

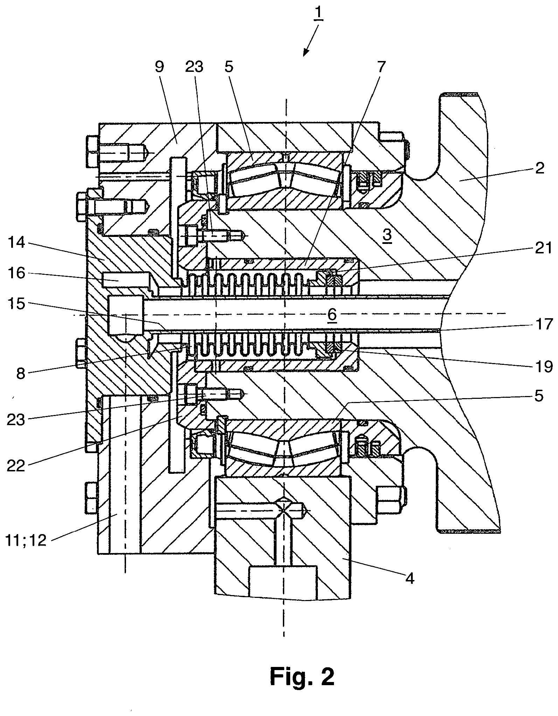

Die Figur 2 zeigt eine Vorrichtung 1 zum Ankuppeln einer Kühlmittelzufuhr und Kühlmittelabfuhr an eine Rolle 2 gemäß einem weiteren Ausführungsbeispiel.

Das Ausführungsbeispiel der Figur 2 zeigt eine alternative Konstruktion zur Sicherung und Fixierung des hohlzylindrischen Elements 7. Gemäß dieser Konstruktion können der Sicherungsring 98 und/oder die Stifte 99 des ersten Ausführungsbeispiels entfallen. Jene Komponenten, die nicht die Befestigung und Fixierung des hohlzylindrischen Elements 7 betreffen, entsprechen denen des ersten Ausführungsbeispiels.

Das hohlzylindrische Element 7 ist auch gemäß dem zweiten Ausführungsbeispiel vorzugsweise flanschlos ausgeführt. Dieses wird nun mittels eines Sicherungsdeckels 22 formschlüssig fixiert. Der Sicherungsdeckel 22 ist ein scheibenförmiges Element, das gegen die Stirnfläche des hohlzylindrischen Elements 7 anschlägt und ggf. etwas staucht, so dass das hohlzylindrische Element 7 in der seitlichen Aussparung des Zapfens 3 formschlüssig gehalten wird. Zu diesem Zweck kann der Sicherungsdeckel mittels Schrauben 23 mit dem Zapfen 3 verschraubt werden. Um ein Verdrehen des hohlzylindrischen Elements 7 in der seitlichen Aussparung des Zapfens 3 noch zuverlässiger zu verhindern, können in der seitlichen Aussparung des Zapfens 3 und/oder außen am hohlzylindrischen Element 7 und/oder am Sicherungsdeckel 22 Mittel vorgesehen sein, die eine formschlüssige Halterung unterstützen. Der Formschluss kann somit zwischen dem hohlzylindrischen Element 7 und der seitlichen Aussparung des Zapfens 3 und/oder zwischen dem hohlzylindrischen Element 7 und dem Sicherungsdeckel 22 vorliegen. So können etwa Nuten in der seitlichen Aussparung des Zapfens 3 vorgesehen sein, in die Federn am Außenumfang des hohlzylindrischen Elements 7 eingreifen, oder die seitliche Aussparung des Zapfens 3 und das hohlzylindrische Element 7 sind nicht kreiszylindrisch ausgeführt, sondern weisen Formen (beispielsweise polygonale Querschnitte) auf, die einander entsprechen und ein Verdrehen verhindern. Alternativ oder zusätzlich findet ein Formschluss zwischen dem hohlzylindrischen Element 7 und dem Sicherungsdeckel 22 statt, beispielsweise ebenfalls durch eine Nut/Feder-artige Ausführung.

Die Verwendung des Sicherungsdeckels 22 kann die Montage der Vorrichtung 1 vereinfachen. Eine besondere technische Wirkung des zweiten Ausführungsbeispiels liegt zudem darin, dass eine Verdrehsicherung des hohlzylindrischen Elements 7 auch dann erzielt wird, wenn bei der Montage der Vorrichtung 1 beispielsweise der Stift 99 (analog mehrere Stifte 99) vergessen wird. Eine Sicherung gegen Verdrehen des hohlzylindrischen Elements 7 ist deshalb wichtig, weil eine Drehung des hohlzylindrischen Elements 7 relativ zum Zapfen 3 eine hohe Beanspruchung der Dichtungsmittel, etwa von O-Ringen im hohlzylindrischen Element 7, zur Folge haben kann. Dies erhöht das Risiko einer etwaigen Undichtigkeit der Drehdurchführung.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen. Der Bereich der Erfindung ist in den Ansprüchen definiert.

### Bezugszeichenliste

- 1: Vorrichtung zum Ankuppeln einer Kühlmittelzufuhr
- 2: Rolle
- 3: Zapfen
- 4: Lagerbock
- 5: Wälzlager
- 6: Rollenbohrung
- 7: Hohlzylindrisches Element
- 8: Elastische Hülse
- 9: Lagerbockdeckel
- 11: Kühlmittelkanal
- 12: Kühlmittelkanal
- 14: Einsatzstück
- 15: Erster Kanal
- 16: Zweiter Kanal
- 17: Rohr
- 19: Gleitring
- 20: Gleitring
- 21: Ansatzstück
- 22: Sicherungsdeckel
- 23: Schraube
- 98: Sicherungsring
- 99: Stift

## Patentansprüche

1. Vorrichtung (1) zum Ankuppeln einer Kühlmittelzufuhr und/oder Kühlmittelabfuhr an eine Rolle (2), insbesondere in einer Stranggießanlage, wobei die Rolle (2) einen Zapfen (3), der in einem Lagerbock (4) drehbar gelagert ist und eine seitliche, sich in Axialrichtung erstreckende Aussparung aufweist, und mindestens einen Rollen-Kühlkanal aufweist, der von einem Kühlmittel durchströmbar ist, wobei die Vorrichtung (1) aufweist:
mindestens einen Kühlmittelkanal (11, 12), der auf der Seite des Zapfens (3) mit dem Rollen-Kühlkanal in Fluidverbindung bringbar ist; und
eine Dichteinheit zum Abdichten der Fluidverbindung zwischen dem Kühlmittelkanal und dem Rollen-Kühlkanal, die eine innere Baugruppe und eine äußere Baugruppe aufweist; wobei
die innere Baugruppe ein hohlzylindrisches Element (7) aufweist, das in die seitliche Aussparung des Zapfens (3) einsetzbar ist,
**dadurch gekennzeichnet, dass**
das hohlzylindrische Element (7) an der Zapfenaußenseite, in Axialrichtung gesehen, keinen Flansch aufweist.

2. Vorrichtung nach Anspruch 1, **dadurch gekennzeichnet, dass** die innere Baugruppe einen Sicherungsdeckel (22) aufweist, der im montierten Zustand gegen eine Stirnfläche des hohlzylindrischen Elements (7) anschlägt und am Zapfen (3) befestigt ist, vorzugsweise mittels einer oder mehrerer Schrauben (23) am Zapfen (3) verschraubt ist.

3. Vorrichtung nach Anspruch 2, **dadurch gekennzeichnet, dass** der Sicherungsdeckel (22) das hohlzylindrische Element (7) formschlüssig in der seitlichen Aussparung des Zapfens (3) fixiert.

4. Vorrichtung nach einem der vorangegangenen Ansprüche, **dadurch gekennzeichnet, dass** die innere Baugruppe ferner einen Sicherungsring (98) aufweist, der gegen eine Stirnfläche des hohlzylindrischen Elements (7) anschlagbar ist, wobei der Sicherungsring (98) vorzugsweise in einer Nut, ausgebildet in der seitlichen Aussparung des Zapfens (3), fixierbar ist.

5. Vorrichtung nach einem der vorangegangenen Ansprüche, **dadurch gekennzeichnet, dass** das hohlzylindrische Element (7) im eingesetzten Zustand an der Innenseite, in Axialrichtung gesehen, einen Boden aufweist, der das hohlzylindrische Element (7) zumindest teilweise schließt.

6. Vorrichtung nach einem der vorigen Ansprüche, **dadurch gekennzeichnet, dass** die innere Baugruppe mindestens einen Stift (99) aufweist, durch den das hohlzylindrische Element am Zapfen (3) fixierbar ist, indem der Stift (99) in eine Stiftöffnung des hohlzylindrischen Elements (7) und eine entsprechende, dazu ausgerichtete Stiftöffnung des Zapfens (3) einbringbar ist.

7. Vorrichtung nach Anspruch 5 und 6, **dadurch gekennzeichnet, dass** die Stiftöffnung des hohlzylindrischen Elements (7) im Boden ausgebildet ist.

8. Vorrichtung nach einem der vorigen Ansprüche, **dadurch gekennzeichnet, dass** die äußere Baugruppe eine elastische Hülse (8) aufweist, die in das hohlzylindrische Element (7) einsetzbar ist.

9. Vorrichtung nach einem der vorigen Ansprüche, **dadurch gekennzeichnet, dass** die innere Baugruppe einen Gleitring (20), vorzugsweise fest mit dem hohlzylindrischen Element (7) verbunden, und die äußere Baugruppe einen Gleitring (19), vorzugsweise fest mit der elastischen Hülse (8) verbunden, aufweisen, die zur Abdichtung der Fluidverbindung miteinander im Reibkontakt stehen.

10. Vorrichtung nach Anspruch 9, **dadurch gekennzeichnet, dass** die beiden Gleitringe (19, 20) im Innern des hohlzylindrischen Elements angeordnet sind.

11. Vorrichtung nach Anspruch 3 und 10, **dadurch gekennzeichnet, dass** die Gleitringe (19, 20) an der Seite des Bodens vorgesehen sind, wobei der Gleitring (20) der inneren Baugruppe vorzugsweise in einer Ausnehmung des Bodens des hohlzylindrischen Elements (7) zumindest teilweise eingesetzt und so an dem hohlzylindrischen Element (7) fixiert ist.

12. Vorrichtung nach einem der vorigen Ansprüche, **dadurch gekennzeichnet, dass** die äußere Baugruppe ferner ein Einsatzstück (14) aufweist, das lösbar am Lagerbock (4) anbringbar ist und zumindest einen ersten Kanal (15) aufweist, der im montierten Zustand des Einsatzstücks (14) den Kühlmittelkanal (11) mit dem Rollen-Kühlkanal in Fluidverbindung bringt.

13. Vorrichtung nach einem der vorigen Ansprüche, **dadurch gekennzeichnet, dass** die Rolle eine sich axial erstreckende Rollenbohrung (6) aufweist, in die ein Rohr (17) eingesetzt ist, so dass im Innern des Rohrs ein erster Rollen-Kühlkanal und in einem Spalt zwischen dem Rohr (17) und der Rollenbohrung (6) oder einem zweiten, sich koaxial erstreckenden Rohr ein zweiter Rollen-Kühlkanal ausgebildet ist, wobei die Vorrichtung zumindest zwei Kühlmittelkanäle (11, 12) aufweist, die entsprechend mit dem ersten Rollen-Kühlkanal und dem zweiten Rollen-Kühlkanal in Fluidverbindung bringbar sind.

14. Vorrichtung nach Anspruch 12 und 13, **dadurch gekennzeichnet, dass** das Einsatzstück (14) ferner einen zweiten Kanal (16) aufweist, wobei im montierten Zustand des Einsatzstücks (14) der erste Kanal (15) und der zweite Kanal (16) entsprechend mit dem ersten Rollen-Kühlkanal und dem zweiten Rollen-Kühlkanal in Fluidverbindung stehen.

15. Vorrichtung nach einem der vorigen Ansprüche, **dadurch gekennzeichnet, dass** das hohlzylindrische Element (7) im eingesetzten Zustand nicht über den Zapfen (3) hinausragt, in Axialrichtung gesehen.

## Claims

1. Device (1) for coupling a coolant feed and/or coolant discharge to a roller (2), particularly in a continuous casting plant, wherein the roller (2) has a journal (3), which is rotatably mounted in a bearing block (4), and a lateral cut-out, which extends in axial direction, and at least one roller cooling channel able to be flowed through by a coolant, wherein the device (1) comprises:
at least one coolant channel (11, 12), which on the side of the journal (3) can be brought into fluid connection with the roller cooling channel; and
a sealing unit for sealing the fluid connection between the coolant channel and the roller cooling channel, which unit comprises an inner subassembly and an outer subassembly; wherein
the inner subassembly comprises a hollow-cylindrical element (7) insertable into the lateral cut-out of the journal (3),
**characterised in that**
the hollow-cylindrical element (7) does not have a flange at the journal outer side as seen in axial direction.

2. Device according to claim 1, **characterised in that** the inner subassembly comprises a securing cover (22) which in the mounted state bears against an end face of the hollow-cylindrical element (7) and is fastened to the journal (3), preferably screw-connected with the journal (3) by means of one or more screws (23).

3. Device according to claim 2, **characterised in that** the securing cover (22) mechanically positively fixes the hollow-cylindrical element (7) in the lateral cut-out of the journal (3).

4. Device according to any one of the preceding claims, **characterised in that** the inner subassembly further comprises a securing ring (98) which can bear against an end face of the hollow-cylindrical element (7), wherein the securing ring (98) is preferably fixable in a groove, which is formed in the lateral cut-out of the journal (3).

5. Device according to any one of the preceding claims, **characterised in that** the hollow-cylindrical element (7) in the inserted state has at the inner side as seen in axial direction a base which at least partly closes the hollow-cylindrical element (7).

6. Device according to any one of the preceding claims, **characterised in that** the inner subassembly comprises at least one pin (99) by which the hollow-cylindrical element is fixable to the journal (3) **in that** the pin (99) is introducible into a pin opening of the hollow-cylindrical element (7) and a corresponding pin opening, which is aligned therewith, of the journal (3).

7. Device according to claim 5 and 6, **characterised in that** the pin opening of the hollow-cylindrical element (7) is formed in the base.

8. Device according to any one of the preceding claims, **characterised in that** the outer subassembly comprises a resilient sleeve (8) insertable into the hollow-cylindrical element (7).

9. Device according to any one of the preceding claims, **characterised in that** the inner subassembly comprises a slide ring (20), which is preferably fixedly connected with the hollow-cylindrical element (7), and the outer subassembly comprise a slide ring (19), which is preferably fixedly connected with the resilient sleeve (8), the slide rings being in mutual frictional contact for sealing the fluid connection.

10. Device according to claim 9, **characterised in that** the two slide rings (19, 20) are arranged in the interior of the hollow-cylindrical element.

11. Device according to claim 3 and 10, **characterised in that** the slide rings (19, 20) are provided at the side of the base, wherein the slide ring (20) of the inner subassembly is preferably at least partly inserted into a recess of the base of the hollow-cylindrical element (7) and thus fixed to the hollow-cylindrical element (7).

12. Device according to any one of the preceding claims, **characterised in that** the outer subassembly further comprises an insert member (14) which is detachably mountable on the bearing block (4) and has at least one first channel (15), which in the mounted state of the insert member (14) brings the coolant channel (11) into fluid connection with the roller cooling channel.

13. Device according to any one of the preceding claims, **characterised in that** the roller has an axially extending roller bore (6) into which a tube (17) is inserted so that a first roller cooling channel is formed in the interior of the tube and a second roller cooling channel is formed in a gap between the tube (17) and the roller bore (6) or a second, coaxially extending tube, wherein the device has at least two coolant channels (11, 12) which can be correspondingly brought into fluid connection with the first roller cooling channel and the second roller cooling channel.

14. Device according to claim 12 and 13, **characterised in that** the insert member (14) additionally has a second channel (16), wherein in the mounted state of the insert member (14) the first channel (15) and the second channel (16) are correspondingly in fluid connection with the first roller cooling channel and the second roller cooling channel.

15. Device according to any one of the preceding claims, **characterised in that** the hollow cylindrical element (17) in the inserted state does not project beyond the journal (3) as seen in axial direction.

## Revendications

1. Dispositif (1) destiné à l'accouplement d'une alimentation d'un agent de refroidissement et/ou d'une évacuation d'un agent de refroidissement à un rouleau (2), en particulier dans une installation de coulée continue ; dans lequel le rouleau (2) présente un tourillon (3) qui est monté en rotation dans un support de palier (4) et qui présente un évidement latéral qui s'étend dans la direction axiale, et présente au moins un canal de refroidissement de rouleau qui peut être traversé par un agent de refroidissement ; dans lequel le dispositif (1) présente : au moins un canal (11, 12) destiné à un agent de refroidissement qui peut être mis en liaison par fluide avec le canal de refroidissement de rouleau sur le côté du tourillon (3) ; et une unité d'étanchéité qui est destinée à rendre étanche la liaison par fluide entre le canal destiné à un agent de refroidissement et le canal de refroidissement de rouleau, qui présente un assemblage interne et un assemblage externe ; dans lequel l'assemblage interne présente un élément (7) sous la forme d'un cylindre creux qui peut venir s'insérer dans l'évidement latéral du tourillon (3) ; **caractérisé en ce que** l'élément (7) sous la forme d'un cylindre creux ne présente aucune bride sur le côté externe du tourillon, lorsqu'on regarde dans la direction axiale.

2. Dispositif selon la revendication 1, **caractérisé en ce que** l'assemblage interne présente un couvercle de sécurité (22) qui vient buter, à l'état monté, contre une surface frontale de l'élément (7) sous la forme d'un cylindre creux et qui est fixé au tourillon (3) ; de préférence est vissé au tourillon (3) au moyen d'une ou de plusieurs vis (23).

3. Dispositif selon la revendication 2, **caractérisé en ce que** le couvercle de sécurité (22) fixe l'élément (7) sous la forme d'un cylindre creux par complémentarité de forme dans l'évidement latéral du tourillon (3).

4. Dispositif selon l'une quelconque des revendications précédentes, **caractérisé en ce que** l'assemblage interne présente en outre un anneau de sécurité (98) qui peut venir buter contre une surface frontale de l'élément (7) sous la forme d'un cylindre creux; dans lequel l'anneau de sécurité (98) peut être fixé de préférence dans une rainure réalisée dans l'évidement latéral du tourillon (3).

5. Dispositif selon l'une quelconque des revendications précédentes, **caractérisé en ce que** l'élément (7) sous la forme d'un cylindre creux présente, à l'état inséré, sur le côté interne, lorsqu'on regarde dans la direction axiale, une base qui ferme au moins en partie l'élément (7) sous la forme d'un cylindre creux.

6. Dispositif selon l'une quelconque des revendications précédentes, **caractérisé en ce que** l'assemblage interne présente au moins une broche (99) qui peut venir se fixer au tourillon (3) à travers l'élément sous la forme d'un cylindre creux, par le fait que la broche (99) peut venir s'insérer dans une ouverture de l'élément (7) sous la forme d'un cylindre creux, destinée à la broche, et dans une ouverture correspondante du tourillon (3), destinée à broche, orientée à cet effet.

7. Dispositif selon les revendications 5 et 6, **caractérisé en ce que** l'ouverture de l'élément (7) sous la forme du cylindre creux, destinée à la broche, est réalisée dans la base.

8. Dispositif selon l'une quelconque des revendications précédentes, **caractérisé en ce que** l'assemblage externe présente un manchon élastique (8) qui peut venir s'insérer dans l'élément (7) sous la forme d'un cylindre creux.

9. Dispositif selon l'une quelconque des revendications précédentes, **caractérisé en ce que** l'assemblage interne présente une bague de glissement (20), reliée de préférence à demeure à l'élément (7) sous la forme d'un cylindre creux et l'assemblage externe présente une bague de glissement (19), reliée de préférence à demeure au manchon élastique (8), les bagues en question entrant en contact par frottement l'une avec l'autre à des fins d'étanchéisation de la liaison par fluide.

10. Dispositif selon la revendication 9, **caractérisé en ce que** les deux bagues de glissement (19, 20) sont disposées à l'intérieur de l'élément sous la forme d'un cylindre creux.

11. Dispositif selon les revendications 3 et 10, **caractérisé en ce que** l'on prévoit les bagues de glissement (19, 20) sur le côté de la base ; dans lequel la bague de glissement (20) de l'assemblage interne est insérée au moins en partie de préférence dans un évidement de la base de l'élément (7) sous la forme d'un cylindre creux et est ainsi fixée à l'élément (7) sous la forme d'un cylindre creux.

12. Dispositif selon l'une quelconque des revendications précédentes, **caractérisé en ce que** l'assemblage externe présente en outre une pièce rapportée (14) qui peut venir s'appliquer de manière amovible contre le support de palier (4) et qui présente au moins un premier canal (15) qui met en liaison par fluide, à l'état monté de la pièce rapportée (14), le canal (11) destiné à un agent de refroidissement avec le canal de refroidissement de rouleau.

13. Dispositif selon l'une quelconque des revendications précédentes, **caractérisé en ce que** le rouleau présent un alésage de rouleau (6) qui s'étend dans la direction axiale, alésage dans lequel est inséré un tube (17), d'une manière telle que, à l'intérieur du tube, est réalisé un premier canal de refroidissement de rouleau et, dans une fente entre le tube (17) et l'alésage de rouleau (6) ou dans un deuxième tube qui s'étend en position coaxiale, est réalisé un deuxième canal de refroidissement de rouleau ; dans lequel le dispositif présente au moins deux canaux (11, 12) destinés à un agent de refroidissement qui, par voie de conséquence, peuvent être mis en liaison par fluide avec le premier canal de refroidissement de rouleau et avec le deuxième canal de refroidissement de rouleau.

14. Dispositif selon les revendications 12 et 13, **caractérisé en ce que** la pièce rapportée (14) présente en outre un deuxième canal (16) ; dans lequel, à l'état monté de la pièce rapportée (14), le premier canal (15) et le deuxième canal (16) peuvent être mis, par voie de conséquence, en liaison par fluide avec le premier canal de refroidissement de rouleau et avec le deuxième canal de refroidissement de rouleau.

15. Dispositif selon l'une quelconque des revendications précédentes, **caractérisé en ce que** l'élément (7) sous la forme d'un cylindre creux, à l'état inséré, ne fait pas saillie au-delà du tourillon (3), lorsqu'on regarde dans la direction axiale.
